# EUROPEAN PATENT APPLICATION

(11) **EP 1 693 775 A1**
(43) Date of publication of application: **23.08.2006**
(21) Application number: 06101634.1
(22) Date of filing: 14.02.2006
(51) Int. Cl.: G06F 21/00

(54) **Systems and methods for shielding an identified vulnerability**

(30) Priority: 17.02.2005 US 60211
(71) Applicant: MICROSOFT CORPORATION, Redmond, WA 98052 (US)
(72) Inventor: Saretto, Cesare John, Redmond, WA 98052 (US); Rigas, Leonidas E., Redmond, WA 98052 (US); Paradise, Paul M, Redmond, WA 98052 (US); Badh, Ranjib S., Redmond, WA 98052 (US); Rader, Walter B, Redmond, WA 98052 (US)
(74) Representative: Grünecker, Kinkeldey, Stockmair & Schwanhäusser Anwaltssozietät

(57) **Abstract**

Systems and methods are described for shielding a vulnerability in an application through disablement of one or more features. In an implementation, a method includes identifying a vulnerability in at least one of a plurality of features for an application module. A communication is formed for receipt by a plurality of clients to shield execution of the application module from the identified vulnerability. The communication describes that the at least one feature is to be disabled from execution in conjunction with the application module.

## Description

### TECHNICAL FIELD

The present invention generally relates to application vulnerabilities and more particularly relates to shielding a vulnerability of an application by disabling one or more features.

### BACKGROUND

Users rely on a variety of applications during a typical day to provide a wide range of functionality. For example, the user may utilize a word processing application to generate a document, a drawing program to create a drawing, a browser to navigate the Internet, and so on. Applications, however, may be vulnerable to attack from a malicious party. Such an attack may interfere with the users' interaction with the application as well as with other applications on a computing device which executes the application.

The malicious party, for example, may exploit a vulnerability in an application to take control of the application, such as through use of a computer virus. Once control of the application is achieved, the malicious party's control may propagate to other applications which are executed by other computing devices through spread of the computer virus. For example, a computer virus may take control of an application on a computer, examine an address book located on the computer, and then transmit itself to each address referenced in the address book. In this way, the computer virus may quickly propagate to a large number of computers in a short amount of time.

Therefore, there is a continuing need for improved techniques for protecting applications from attacks from malicious parties.

### SUMMARY

Systems and methods are described for shielding a vulnerability in an application through disablement of one or more features. In an implementation, a method includes identifying a vulnerability in at least one of a plurality of features for an application module. A communication is formed for receipt by a plurality of clients to shield execution of the application module from the identified vulnerability. The communication describes that the at least one feature is to be disabled from execution in conjunction with the application module.

In another implementation, a method includes determining that a vulnerability exists in at least one of a plurality of features for a particular version of an application module. A communication is formed for transfer over a network to each of a plurality of clients having the particular version of the application module. The communication describes a feature to be disabled that shields execution of the application module from the vulnerability.

In a further implementation, a method includes receiving a communication at a client from over a network which identifies at least one of a plurality of features to be disabled from execution in conjunction with an application module due to an identified vulnerability. A policy is examined which describes a relative degree of compliance that the client is to utilize in response to the communication.

### BRIEF DESCRIPTION OF THE DRAWINGS

FIG. 1 is an illustration of an environment in an exemplary implementation that is operable to employ feature management techniques.

FIG. 2 is an illustration of a system in an exemplary implementation showing a feature management authority and one of a plurality of clients of FIG. 1 in greater detail.

FIG. 3 is a flow diagram depicting a procedure in an exemplary implementation in which a vulnerability is identified in a feature of an application module, the feature is disabled to shield against the vulnerability, and a cure is later provided that enables the application module to be executed using the feature.

FIG. 4 is a flow diagram depicting a procedure in an exemplary implementation in which a version-specific vulnerability in a feature is identified and disabled to shield exploitation of the particular versions of the application modules.

FIG. 5 is a flow diagram depicting a procedure in an exemplary implementation in which a policy is utilized to determine a relative degree of compliance that a client is to utilize in responding a communication which identifies a vulnerability in an application module.

FIG. 6 is an illustration of an exemplary implementation in which a communication is output for viewing by a user, in which, the communication is configured to re-enable a feature that was disabled upon receipt of the communication.

FIG. 7 is an illustration of an exemplary implementation in which a communication is output for viewing by a user, in which, the communication is configured to disable a feature when selected by a user.

The same reference numbers are utilized in instances in the discussion to reference like structures and components.

### DETAILED DESCRIPTION

### Overview

Feature management techniques are described. As previously described, applications may be vulnerable to attack from a malicious party in a variety of ways. For example, the malicious party may exploit one or more vulnerabilities in an application to take control of the application, such as through use of a computer virus. Once control of the application is achieved, the malicious party (and more particularly the computer virus) may quickly propagate to other applications which are executed by other computing devices.

Vulnerabilities may occur in an application in a variety of ways. For example, an application may utilize a third-party "plugin" that contains a flaw that results in vulnerability of an application to attack. A plugin is a module that typically adds a specific feature (e.g., service) to an application which utilizes the plugin. For instance, a plugin may be provided to support new technology (e.g., a new video format) for use by the application. However, if a malicious party successfully locates a vulnerability in the plugin, the malicious party may use the vulnerability to corrupt the application, the computer executing the application, and/or other applications either located on the computer or on other computers which are accessible over a network. Thus, the vulnerability may be quickly exploited and spread to affect a large number of computing devices and applications, which may result in significant loses to users (e.g., individual people, corporations, and so on) which employ the application.

In an implementation, a feature management authority is described which is configured to manage features of an application module. Therefore, when a vulnerability is identified in a feature, that feature may be disabled centrally by the feature management authority for applications which have the feature. For example, a client may include an application module having a plurality of features which are configured to be disabled and/or enabled by the feature management authority. The client may periodically communicate with the feature management authority, which may check the features of the client against a list of known vulnerabilities. If a feature has a known vulnerability, the feature management authority forms a communication which specifies which feature of the application module is to be disabled from execution by the client in conjunction with the application module to protect the application module from the vulnerability. Therefore, the application module may quickly "raise a shield" to protect against the vulnerability until a cure to the vulnerability is found, and therefore limit the exploitation of the vulnerability by malicious parties. Once found, the cure may be communicated to the client (e.g., via a patch) to cure the vulnerability and to enable the feature to be executed without exposing the application module to the vulnerability. In this way, the disablement of the feature may shield the application module from the spread of the computer virus as well as contributing to the spread of the computer virus. Although the disablement of features relating to an application module is described in the following discussion as a part of the application module itself, the features may also be included in other software or hardware which affects the execution of the application module, as well as to the features of the hardware or software itself.

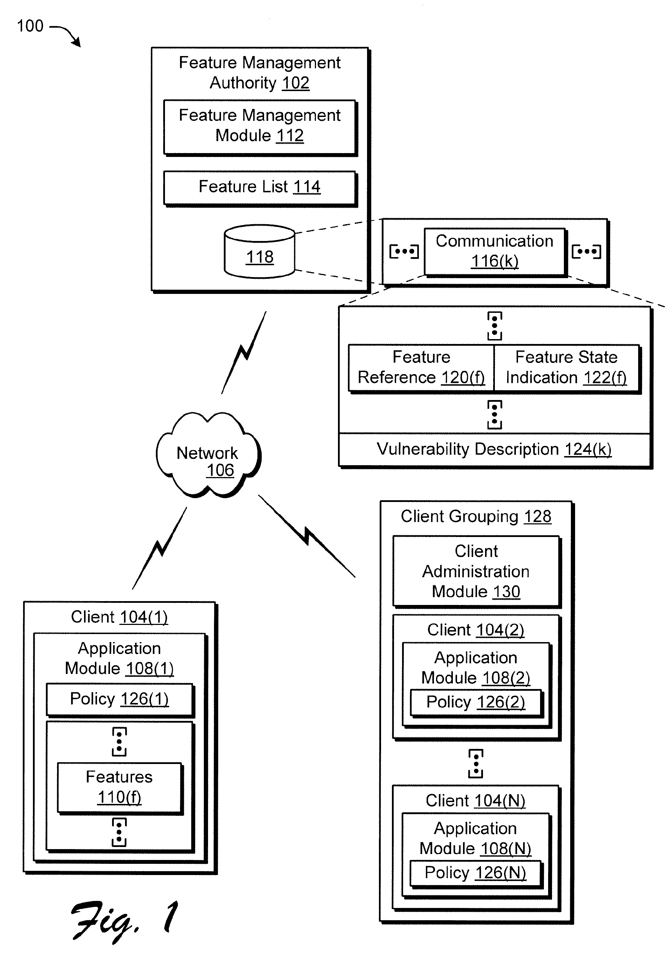

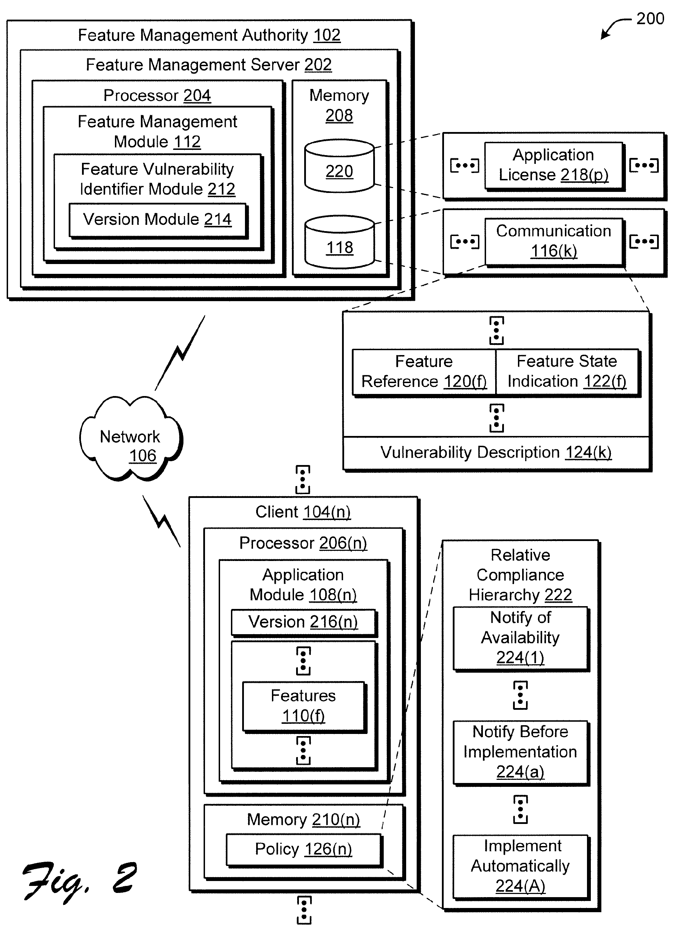

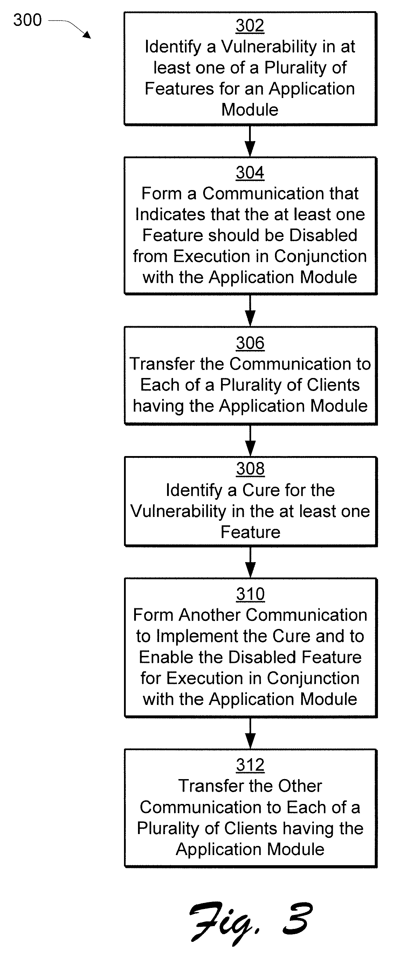

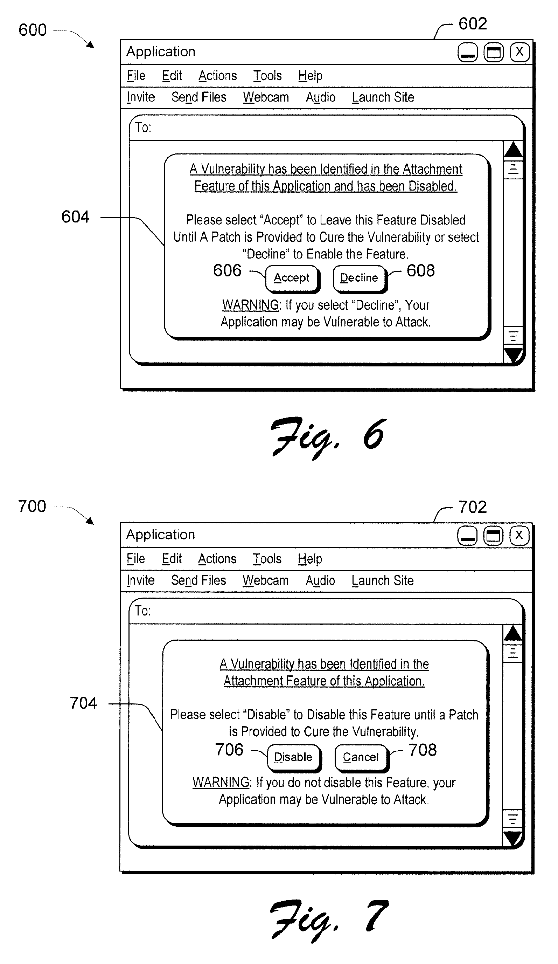

The client may comply with the communication which is configured to disable the feature in a variety of ways. For example, the application module may be configured to examine a policy which indicates "how to" comply with the communication, namely the suggested disablement of the feature. For instance, the policy may indicate that the client is to automatically comply with the communication (e.g., due to a license agreement between the client and an application provider), and therefore automatically disable the feature upon receipt of the communication. In another instance, the policy may be configured by a network administrator (e.g., in a managed corporate network) to require authorization by the network administrator before complying with the communication to disable the feature. In a further instance, the policy may be specified by a user such that the communication is output for viewing by the user to determine whether to implement the action specified by the communication, e.g., to disable the feature. For example, the communication, when output, may describe the vulnerability and the feature which is to be disabled to protect against the vulnerability. Therefore, the user may make an informed decision as whether to disable the feature or leave the feature enabled but to "watch" for possible exploitation of the vulnerability. A variety of other techniques may also be utilized to employ a policy which specifies relative degrees of compliance with the communication, further discussion of which may be found in relation to FIG. 6. In the following discussion, an exemplary environment is first described in relation to FIGS. 1 and 2 which is operable to employ feature management techniques. Exemplary procedures are then described in relation to FIGS. 3 through 7 which are operable in the described exemplary environment, as well as in other environments.

### Exemplary Environment

FIG. 1 is an illustration of an environment 100 in an exemplary implementation that is operable to employ feature management techniques. The illustrated environment 100 includes a feature management authority 102 and a plurality of clients 104(1), 104(2), ..., 104(N) which are communicatively coupled, one to another, over a network 106. The clients 104(1)-104(N) may be configured in a variety of ways. For example, the client 104 may be configured as a computing device that is capable of communicating over the network 106, such as a desktop computer, a mobile station, an entertainment appliance, a set-top box communicatively coupled to a display device, a wireless phone, a game console, and so forth. Thus, each of the clients 104(1)-104(N) may range from full resource devices with substantial memory and processor resources (e.g., personal computers, game consoles) to low-resource devices with limited memory and/or processing resources (e.g., traditional set-top boxes, hand-held game consoles). The clients 104(1)-104(N) may also relate to a person and/or entity that operate the clients. In other words, clients 104(1)-104(N) may describe logical clients that include users, software and/or devices.

Although the network 106 is illustrated as the Internet, the network may assume a wide variety of configurations. For example, the network 106 may include a wide area network (WAN), a local area network (LAN), a wireless network, a public telephone network, an intranet, and so on. Further, although a single network 106 is shown, the network 106 may be configured to include multiple networks. For instance, clients 104(2)-104(N) may be communicatively coupled, one to another, over a corporate intranet and also be communicatively coupled to the feature management authority 102 over the Internet through a corporate network gateway. A variety of other instances are also contemplated.

Each of the clients 104(1)-104(N) is illustrated as including a respective one of a plurality of application modules 108(1)-108(N). The application modules 108(1)-108(N) may be configured in a variety of ways to provide a variety of functionality. For example, one or more of the application modules 108(1)-108(N) may be configured as an operating system, a word processor, a browser, an instant messaging module, a spreadsheet application, a note-taking application, a photo-manipulation application, a game, a presentation application, and so on.

Each of the application modules 108(1)-108(N) may provide a variety of features. For example, application module 108(1) is illustrated as including a plurality of features 110(f), where "f" can be any integer from one to "F". The features 110(f) may be provided in a variety of ways. For example, one or more of the plurality of features 110(f) may be created as a part of the application module 108(1) when originally written. Additionally, one or more of the plurality of features 110(f) may be configured as a "plugin" module for use with the application module 108(1) after it has already been created and distributed for use by the plurality of clients 104(1)-104(N). For example, a third-party developer may create new functionality (e.g., feature 11O(f)) for use in conjunction with the application module 108(1), such as a new photo viewer which is configured to support a new photo format. To provide this new functionality (e.g., feature 110(f)) to the application module 108(1), the third-party developer may create a plugin module for execution in conjunction with the application module 108(1) such that the application module 108(1) may utilize the new functionality. However, the plugin module (e.g., feature 110(f)) may have a vulnerability which is exploitable by malicious parties. Similar functionality may be employed by the other application modules 108(2)-108(N) which are executable on the other clients 104(2)-104(N), respectively. Thus, each of the application modules 108(1)-108(N) may have one or more vulnerabilities which are exploitable by malicious parties which may affect operation of the environment 100 as a whole.

The feature management authority 102 in the environment 100 of FIG. 1 is illustrated as a centralized system for managing the features 110(t) of the application module 108(1), and well as features of the other application modules 108(2)-108(N). For example, the feature management authority 102 may include a feature management module 112 which is executable to maintain a feature list 114. The feature list 114, for instance, may be configured to include a description of an identified vulnerability and one or more corresponding features which result in the identified vulnerability. Using this feature list 114, the feature management module 112 may determine which of the plurality of features 110(f) of the application module 108(1), if any, contain an exploitable vulnerability.

When an exploitable vulnerability is found in one or more of the plurality of features 110(f), the feature management module 112 may obtain at least one of a plurality of communications 116(k), where "k" can be any integer from one to "K", which is illustrated as stored in a database 118 accessible by the feature management authority 102. The plurality of communications 116(k) may be obtained in a variety of ways. For example, the feature management authority 102 may generate the communications 116(k) in response to a communication sent by the client 104(1) which identifies the plurality of features 110(f) which are included in the application module 108(1). In another example, the communications 116(k) are preconfigured to correspond to vulnerabilities, when identified, for later selection by the feature management module 112. A variety of other instances are also contemplated.

The plurality of communications 116(k) may be configured in a variety of ways for communication to the client 104(1). For example, communication 116(k) is illustrated as having a plurality of feature references 120(f) and a corresponding plurality of feature state indications 122(f). Each of the feature references 120(f) is this example correspond to a respective one of a plurality of features 110(f) which cause the vulnerability. Each feature reference 120(f) also includes a corresponding feature state indication 122(f) which indicates what "state" that referenced feature is to be placed for shielding execution of the application module 108(1) from the vulnerability. For example, feature reference 120(f) may reference an "attachment" feature (e.g., feature 110(f)) and the corresponding feature state indication 122(f) may indicate that the attachment feature (e.g., feature 110(f)) is to be disabled. In another example, the communication 116(k) includes feature references of just those features 110(f) which are to be disabled, and therefore does not include a feature state indication. A variety of other examples are also contemplated. For example, the "feature state" is not limited to binary states and may provide specification for additional granularity, such as to enable or disable sub-features of a "parent" feature, instruct a feature to behave in an altered state that is not fully disabled, and so on.

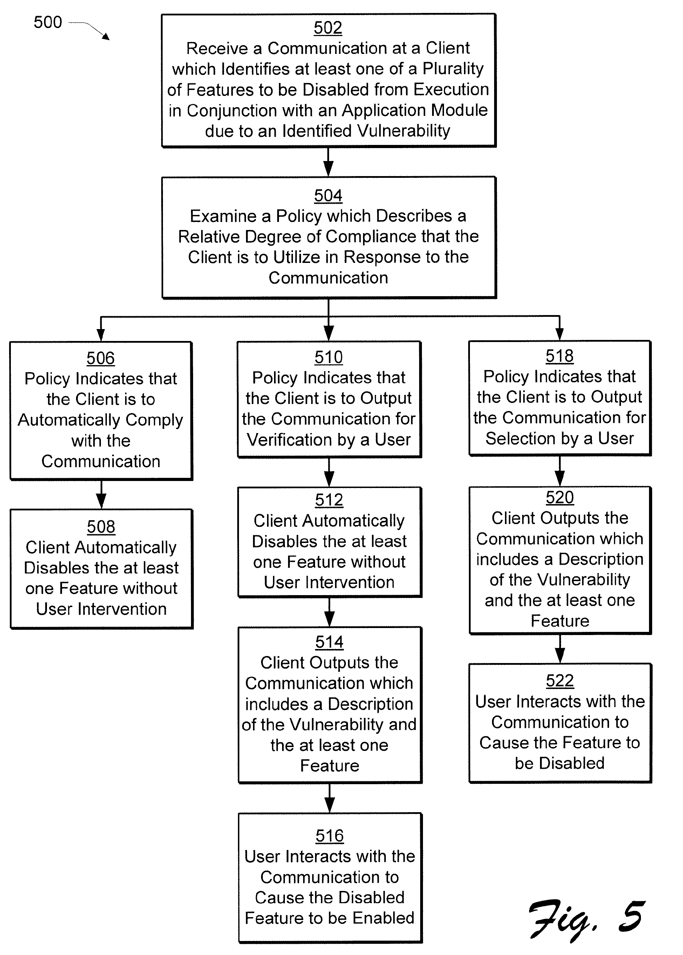

The communication 116(k) may also include a vulnerability description 124(k). The vulnerability description 124(k), for instance, may be output when the communication 116(k) is received by each of the clients 104(1)-104(N) such that users may be informed as to "why" the feature 110(f) is to be disabled. Therefore, the vulnerability description 124(k) may enable the clients 104(1)104(N) to "judge for themselves" on whether to comply with the communication 116(k), further discussion of which may be found in relation to FIGS. 5-7.

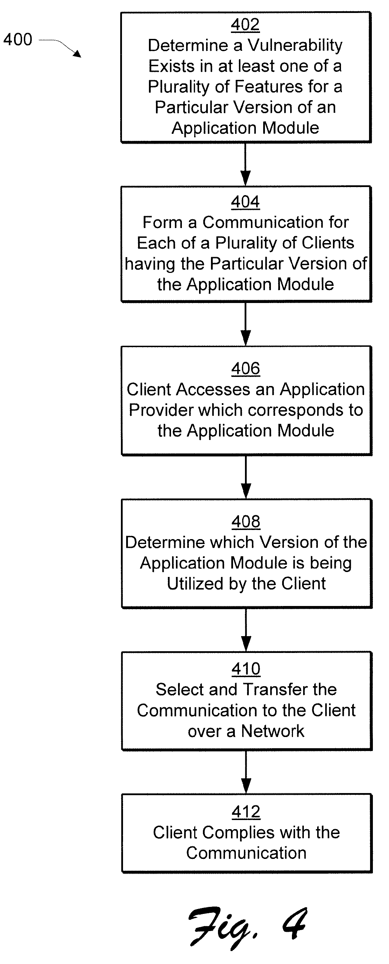

Relative degrees of compliance may also be specified through use of a plurality of policies 126(1)-126(N). For example, client 104(1) may have a policy 126(1) which specifies that any communication 116(k) from the feature management authority 102 is to be automatically implemented. Policy 126(1), for instance, may be specified as part of a license agreement between the client 104(1) and a provider of the application module 108(1). In another example, a policy may be arbitrarily built into the client 104(1) and is not included in the license agreement. In a further example, each of the client 104(2)-104(N) in a client grouping 128 may have a respective policy 126(2)-126(N) which is specified through use of a client administration module 130. For instance, the client grouping 128 may be formed as a part of a corporate entity which is managed by a network administrator. The network administrator may interact with the client administration module 130 to set policies 126(2)-126(N) for respective clients 104(2)-104(N). The policies 126(2)-126(N) may be set such that when the communication 116(k) is received from the feature management authority 102, the network administrator may determine whether and when to disable referenced features. Thus, the policies 126(2)-126(N) may support control of the application modules 108(2)-108(N) by the network administrator. A variety of other examples are also contemplated, further discussion of which may be found in relation to FIG. 4.

Generally, any of the functions described herein can be implemented using software, firmware (e.g., fixed logic circuitry), manual processing, or a combination of these implementations. The terms "module" and "logic" as used herein generally represent software, firmware, or a combination of software and firmware. In the case of a software implementation, the module or logic represents program code that performs specified tasks when executed on a processor (e.g., CPU or CPUs). The program code can be stored in one or more computer readable memory devices, further description of which may be found in relation to FIG. 2. The feature management techniques described below are platform-independent, meaning that the techniques may be implemented on a variety of commercial computing platforms having a variety of processors.

FIG. 2 is an illustration of a system 200 in an exemplary implementation showing the feature management authority 102 and one of the plurality of clients 104(1)-104(N) of FIG. 1 in greater detail. In FIG. 2, the client 104(n) is representative of any one of the plurality of clients 104(1)-104(N) and will be referenced both to relate to a single client (e.g., "the client 104(n)") and the plurality of clients (e.g., "the clients 104(n)"). The system 200 of FIG. 2 is illustrated as implementing the feature management authority 102 and the plurality of clients 104(n) through use of a plurality of computing devices. For example, feature management authority 102 is illustrated as including a feature management server 202 and the client 104(n) is illustrated as a client device. The feature management server and the client 104(n) each include a respective processor 204, 206(n) and a respective memory 208, 210(n).

Processors are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions. Alternatively, the mechanisms of or for processors, and thus of or for a computing device, may include, but are not limited to, quantum computing, optical computing, crossbar latches, mechanical computing (e.g., using nanotechnology), and so forth. Additionally, although a single memory 208, 210(n) is shown, respectively, for the feature management server 202 and the client 104(n), a wide variety of types and combinations of memory may be employed, such as random access memory (RAM), hard disk memory, removable medium memory, and so forth. Further, although a single feature management server 202 is shown for the feature management authority, the feature management server 202 may represent a plurality of servers, such as a server cluster.

The feature management server 202 is illustrated as executing the feature management module 112 on the processor 204, which is also storable in memory 208. The feature management module 112 is executable to manage the plurality of features 110(f) of the plurality of application modules 108(n). For example, the feature management module 112 may be executed to control which features 110(f) are "enabled" or "disabled" for execution in conjunction with the application module 108(n). As previously described, for instance, the feature management module 112 may obtain a communication 116(k) for transfer over the network 106 to the client 104(n). The communication 116(k) includes a feature state indication 122(f) for each feature reference 120(f), such as "<attachment feature><enabled>".

The feature management module 112 is further illustrated as including a feature vulnerability identifier module 212. The feature vulnerability identifier module 212 is representative of functionality of the feature management module 112 which is executable to determine which of the plurality of features 110(f) is vulnerable. This determination may be performed in a variety of ways. For example, the feature vulnerability identifier module 212 may utilize the feature list 114 of FIG. 1 which describes which features have a corresponding vulnerability. The feature list 114 of FIG. 1, for instance, may be input by a user based upon an analysis of a computer virus. In another example, the feature vulnerability identifier module 212 may be executed to generate the feature list 114 of FIG. 1 automatically and without user intervention. For instance, the feature vulnerability identifier module 212 may be executable to examine a computer virus and determine which of the plurality of features 110(f) of the application module 108(n) are targeted by the computer virus. A variety of other examples are also contemplated.

The feature vulnerability identifier module 212 is further illustrated as including a version module 214. The version module 214 is representative of functionality which is executable to determine which version of an application module 108(n) has an identified vulnerability. For example, the application module 108(n) may be continually developed such that different versions of the application module 108(n) have different features. Because the features may be different from version to version (such as which features are included and/or how the features are implemented), one version of the application module 108(n) may have an identified vulnerability that is not exploitable in another version of the application module. Therefore, the version module 214 may be executed to determine which version of the application module 108(n) includes the vulnerability. Thus, the feature management module may determine which version 216(n) of the application module 108(n) is available on the client 104(n), and whether that particular version has an identified vulnerability. Further discussion of versions and feature vulnerability may be found in relation to FIG. 4.

The client 104(n) is illustrated as including the policy 126(n) as stored in memory 210(n). As previously described, the policy 126(n) may be configured in a variety of ways, such as based on a respective one of a plurality of application licenses 218(p), where "p" can be any integer from one to "P", which correspond to the application module 108(n). For instance, the feature management module 112 may locate an application license 218(p) in a database 220 which corresponds to the application nodule 108(n) of the client 104(n). The application license 218(p) describes a contractual relationship that was entered into by the client 104(n) to use the application module 108(n). The application license 218(p), for instance, may indicate that the client 104(n) agrees to automatically implement the communication 116(k) received from the feature management authority 102. Therefore, the policy 126(n) may be formed to reflect this application license 218(p), further discussion of which may be found in relation to FIG. 5.

The policy 126(n) may also be configured to describe a relative degree of compliance that the client 104(n) is to employ when responding to the communication 116(k). For example, the policy 126(n) is illustrated as having a relative compliance hierarchy 222 which includes a plurality of examples of differing relative degrees of compliance that may be performed by the client 104(n).

The relative compliance hierarchy 222 is illustrated in FIG. 2 as ranging from "notify of availability" 224(1) of the communication 116(k) to "notify before implementation" 224(a) to "implement automatically" 224(A). For instance, when the policy 126(n) is set to "implement automatically" 224(A), the client 104(n) (e.g., the application module 108(n)) automatically configures each of the plurality of features 110(f) of the application module 108(n) according to the feature state indication 122(f) for the feature reference 120(f), such as "<attachment feature> <disable>". When the policy 126(n) is set to "notify before implementation" 224(a), the application module 108(n) may output the vulnerability description 124(k) of the communication 116(k) which describes the feature reference 120(f) (e.g., "attachment feature") and the feature state indication 122(f) (e.g., "disable"). Therefore, a user of the client 104(n) may make an informed decision as to whether to comply with the communication 116(k), e.g., disable the attachment feature. Likewise, when the policy 126(n) is set to "notify of availability" 224(1), the application module 108(n) may output a message indicating that the communication 116(k) is available for download, but does not yet obtain the communication 116(k). A variety of other relative degrees of compliance may be specified by the policy 126(n), such as a policy which indicates that the client is not to comply with the communication whatsoever. Further discussion of relative degrees of compliance may be found in relation to FIGS. 5 through 7.

### Exemplary Procedures

The following discussion describes vulnerability shielding techniques that may be implemented utilizing the previously described systems and devices. Aspects of each of the procedures may be implemented in hardware, firmware, or software, or a combination thereof. The procedures are shown as a set of blocks that specify operations performed by one or more devices and are not necessarily limited to the orders shown for performing the operations by the respective blocks. In portions of the following discussion, reference will be made to the environment 100 of FIG. 1 and the system 200 of FIG. 2.

FIG. 3 is a flow diagram depicting a procedure 300 in an exemplary implementation in which a vulnerability is identified in a feature of an application module, the feature is disabled to shield against the vulnerability, and a cure is later provided that enables the application module to be executed using the feature. A vulnerability is identified in at least one of a plurality of features of an application module (block 302). For example, the feature management module 112 may cause execution of the feature vulnerability identifier module 212 to identify that one or more of the plurality of features 110(f) of the application module 108(n) expose a vulnerability, such as through examination of a feature list 114, examination of a computer virus itself, and so on. For instance, the computer virus may be examined to determine which feature is targeted by the virus.

A communication is then formed which indicates that the at least one feature should be disabled from execution in conjunction with the application module (block 304). For example, the feature management module 112 may identify a feature 110(f) provided by a third-party plugin that exposes a vulnerability in the application module 108(n). Therefore, the communication may identify the third-party plugin (e.g., feature reference 120(f))) and a state, in which, the plugin is to be placed (e.g., feature state indication 122(f)), such as to be disabled.

The communication is then transferred to each of a plurality of clients which have the application module (block 306). For example, the feature management authority 102 may transfer the communication 116(k) to client 104(1), 104(n), 104(N) over the network 106, and thus serve as a centralized source for management of the features for each of the clients 104(1)-104(N). Each of the clients may then apply the communication, further discussion of which may be found in relation to FIG. 5.

A cure is then identified for the vulnerability in the at least one feature (block 308). For example, a team of software engineers may examine a computer virus and write a "patch" which cures the vulnerability exploited by the computer virus. Another communication is then formed to implement the cure and to enable the previously disabled feature for execution in conjunction with the application module (block 310). For example, the communication may include the patch to provide the "cure". The other communication is then transferred to each of the plurality of clients having the application module (block 312). Thus, in this exemplary procedure 300 when the vulnerability is identified in a feature, the feature is disabled to shield (i.e., protect) against the identified vulnerability until a cure may be provided. Therefore, this "shielding" may protect not only the application module itself, but other application modules that may be attacked due to the exploitation of the application module.

A computer virus, for instance, may be written to exploit a particular feature of an application. Rather than waiting until a cure is found for the virus and then applying the cure, the application module may be shielded for the amount of time it takes to find the cure. Thus, the application module is not vulnerable during the intervening time it takes to find the cure and is therefore shielded from the virus. By disabling the feature on a plurality of such clients, the spread of the virus may be limited and even prevented.

FIG. 4 is a flow diagram depicting a procedure 400 in an exemplary implementation in which a version-specific vulnerability in a feature is identified and disabled to shield exploitation of the particular versions of the application modules. A determination is made that a vulnerability exists in at least one of a plurality of features of a particular version of an application module (block 402). For instance, the application module may be continually developed by an application provider to include additional features and to cure identified vulnerabilities. Therefore, different versions of the application module may have different implementations of the same feature and consequently different possible vulnerabilities. Thus, in this example a particular feature for a particular version of an application module is identified as having an exploitable vulnerability.

A communication is then formed for each of a plurality of clients which have the particular version of the application module (block 404). For example, the feature management module 112 may form communication 116(k) for storage with a plurality of other communications in the database 118.

A client then accesses an application provider which corresponds to the application module (block 406). For instance, the application module may logon to an instant messaging service to initiate an instant messaging session with another client, e.g., client 104(2).

Once access is achieved, a determination is made as to which version of the application module 108(1) is available on the client 104(1) (block 408). For example, the client 104(1) may communicate version information during the logon process. A communication may then be selected and transferred to the client over a network based on the version information (block 410). For example, the feature management module 112 may select one of the plurality of communications 116(k) which correspond to the version of the application module. The client may then comply with the communication (block 412), further discussion of which may be found in relation to the following figures.

In this exemplary procedure 400, a determination was made as to which communication was to be sent to a particular client. In another implementation, each communication may be communicated to each client when formed, and then the client may determine whether the communication is relevant. For example, as vulnerabilities are identified in an application module, the feature management authority 102 may send a communication each of the plurality of clients 104(1)-104(N). The clients 104(1)-104(N) (e.g., through execution of the respective application module 108(1)-108(N)) may determine whether the communication is relevant to the client. For instance, the communication may indicate that a vulnerability has been identified in a particular version of the application module. Therefore, if the application module included on the client does not match that particular version, the client may determine that the communication is not relevant. A variety of other instances are also contemplated.

FIG. 5 is a flow diagram depicting a procedure 500 in an exemplary implementation in which a policy is utilized to determine a relative degree of compliance that a client is utilize in responding to a communication which identifies a vulnerability in an application module. A communication is received, at a client, which identifies at least one of a plurality of features to be disabled from execution in conjunction with an application module due to an identified vulnerability (block 502). For example, as previously described the communication 116(k) may include a feature reference 120(f) (e.g., attachment feature) and a feature state indication 122(f), e.g., disable.

Upon receipt of the communication, a policy is examined which describes a relative degree of compliance that the client is to utilize in response to the communication (block 504). For example, the application module 108(n) may be executed to examine a policy 126(n) which is available locally on the client 104(n). In another example, the application module 108(n) examines a policy provided by the client administration module 130, such as a policy that is specified by a network administrator of a corporate network. The policy 126(n) may describe a wide variety of relative degrees of compliance that the client 104(n) is to employ upon receipt of the communication 11 6(k).

The policy, for example, may indicate that the client is to automatically comply with the communication (block 506). For instance, the application module 108(n) may be subject to an application license 218(p) which mandates that the application module 108(n) is to comply with any communications communicated from the feature management authority 102. Therefore, the client 104(n) in this instance automatically disables the at least one feature specified in the communication 116(k) for execution in conjunction with the application module 108(n) (block 508). For instance, the application module 108(n) may specify that the feature 110(f) is to be disabled from execution with the application module 108(n), but not from execution with other application modules. A plugin module, for example, may be utilized by multiple application modules which are available locally on the client 104(n). Therefore, the communication may be utilized to disable execution of the feature 110(f) for just that application module 108(n). In another instance, disablement of the feature 110(f) is employed for all application modules on the client which have the feature 110(f). A variety of other instances are also contemplated.

In another example, the policy may indicate that the client is to output the communication for verification by a user (block 510). For instance, the client 104(n), upon receipt of the communication 116(k), may automatically disable the feature 110(f) as described in the previous example (block 512). However, in this instance the client 104(n) outputs the communication which includes a description of the vulnerability 124(k) and the at least one feature (block 514). A user of the client 104(n) may then interact with the output communication to cause the disabled feature to be re-enabled (block 516). The communication may be output in a variety of ways, such as to appear the first time the client attempts to use the disabled feature, immediately upon receipt of the communication, and so on.

FIG. 6 is an illustration of an exemplary implementation 600 in which a communication is output for viewing by a user, in which the communication is configured to re-enable a feature that was disabled upon receipt of the communication. A user interface 602 is shown having an output of the communication 604 received by the client 104(n) at (block 514) of FIG. 5. The communication 604 includes a description of the vulnerability and the feature affected by the vulnerability, which is illustrated as follows:
A vulnerability has been identified in the attachment feature of this application and has been disabled. Please select "Accept" to leave this feature disabled until a patch is provided to cure the vulnerability or select "Decline" to enable this feature. Warning: If you select decline your application may be vulnerable to attack.
Therefore, the user may select an "accept" 606 button or a "decline" 608 button to comply with or reject the communication 116(k), respectively. Thus, in this instance, the communication 116(k) automatically disables the feature 110(f), but provides the user with an alternative to enable the feature. In this way, the user may make an informed decision as to whether the feature 110(f) should be disabled based on that user's contemplated use of the application module 108(n).

The application module 108(n), for instance, may be configured as an email application that is executable to send and receive emails. The user may still desire to receive email attachments and therefore select the "decline" 608 button. However, the user is still warned as to possible vulnerabilities in the attachment feature, and therefore may be more conscientious in the use of the attachment feature, such as to only accept emails having attachments from trusted sources. A variety of other instances are also contemplated.

Returning again now to FIG. 5, in a further example the policy may indicate that the client is to output the communication for selection by the user (block 518). The client then outputs the communication which includes a description of the vulnerability and the at least one feature (block 520). The user may then interact with the communication to cause the feature to be disabled (block 522). Thus, in this instance the feature is not disabled until agreed to by the user.

FIG. 7 is an illustration of an exemplary implementation 700 in which a communication is output for viewing by a user, in which the communication is configured to disable a feature when selected by a user. A user interface 702 is shown having an output of the communication 704 by the client 104(n) as described in conjunction with block 520 of FIG. 5. Like FIG. 6, the communication 704 includes a description of the vulnerability and the feature affected by the vulnerability, which is illustrated as follows:
A vulnerability has been identified in the attachment feature of this application. Please select "Disable" to disable this feature until a patch is provided to cure the vulnerability. Warning: If you select cancel your application may be vulnerable to attack.
Therefore, the user may select a "disable" 706 button or a "cancel" 708 button to comply with or reject the communication 116(k), respectively. Thus, in this instance, the communication 116(k) does not automatically disable the feature 110(f), but rather waits for the user to select whether disablement is desired. As before, the user may make an informed decision as to whether the feature 110(f) should be disabled based on that user's contemplated use of the application module 108(n).

Thus, in this procedure 500, three relative degrees of compliance are described for implementation by the client 104(n) for response to a communication, from automatically complying with the communication, to complying with the communication and verifying that compliance is desired, to verifying that compliance is desired before complying with the communication. A variety of other relative degrees of compliance are also contemplated without departing from the spirit and scope thereof.

### Conclusion

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A method comprising:
identifying a vulnerability in at least one of a plurality of features of an application module; and
forming a communication for receipt by a plurality of clients to shield execution of the application module from the identified vulnerability, wherein the communication describes that the at least one said feature is to be disabled from execution in conjunction with the application module.

2. A method as described in claim 1, wherein each said application module is selected from the group consisting of:
an operating system;
a word processor;
a browser;
an instant messaging module;
a spreadsheet application;
a note-taking application;
a photo-manipulation application;
a game; and
a presentation application.

3. A method as described in claim 1, wherein the communication is not capable of curing the identified vulnerability.

4. A method as described in claim 1, wherein the at least one said feature is provided by a plug-in module.

5. A method as described in claim 1, wherein the communication:
causes a respective said client to disable the at least one said feature; and
includes a notification for output by the respective said client which:
describes the vulnerability; and
provides functionality to enable the at least one said feature after the at least one said feature has been disabled.

6. A method as described in claim 1, wherein the communication causes a respective said client to disable the at least one said feature automatically and without user intervention.

7. A method as described in claim 1, further comprising examining a policy which describes a relative degree of compliance that the client is to utilize when applying the communication.

8. A method as described in claim 1, further comprising forming another communication for transfer over the network to cure the identified vulnerability and to enable the at least one said feature.

9. A method comprising:
determining that a vulnerability exists in at least one of a plurality of features for a particular version of an application module; and
forming a communication for transfer over a network to each of a plurality of clients having the particular version of the application module, wherein the communication describes a feature to be disabled that shields execution of the application module from the vulnerability.

10. A method as described in claim 9, wherein the communication is not capable of curing the vulnerability.

11. A method as described in claim 9, wherein the application module is selected from the group consisting of:
an operating system;
a word processor;
a browser;
an instant messaging module;
a spreadsheet application;
a note-taking application;
a photo-manipulation application;
a game; and
a presentation application.

12. A method as described in claim 9, wherein the feature is provided by a plug-in module.

13. A method as described in claim 9, wherein the communication:
causes a respective said client to disable the feature automatically and without user intervention; and
includes a notification for output by the respective said client which:
describes the vulnerability; and
provides functionality to enable the feature after the feature has been automatically disabled.

14. A method as described in claim 9, further comprising examining a policy which describes a relative degree of compliance that the client is to apply in response to the communication.

15. A method as described in claim 9, further comprising forming another communication for transfer over the network to cure the vulnerability and to enable the feature.

16. A method comprising:
receiving a communication at a client from over a network which identifies at least one of a plurality of features to be disabled from execution in conjunction with an application module due to an identified vulnerability; and
examining a policy which describes a relative degree of compliance that the client is to utilize in response to the communication.

17. A method as described in claim 16, wherein the policy is based on a license agreement involving execution of the application module on the client.

18. A method as described in claim 16, wherein the policy is specified at the client by a user of the client.

19. A method as described in claim 16, wherein the policy is specified by a network administrator for a plurality of said clients.

20. A method as described in claim 16, wherein the relative degree includes automatically disabling the at least one feature or outputting a notification that describes the identified vulnerability.
